# EUROPEAN PATENT APPLICATION

(11) **EP 4 783 247 A1**
(43) Date of publication of application: **29.07.2026**
(21) Application number: 25861707.5
(22) Date of filing: 16.09.2025
(51) Int. Cl.: H01M 4/13, H01M 4/136, H01M 4/134, H01M 4/133, H01M 10/0525

(54) **ANODE SHEET AND BATTERY**

(30) Priority: 04.12.2024 CN 202411777760
(71) Applicant: Eve Power Co., Ltd., Jingmen, Hubei 448000 (CN)
(72) Inventor: WANG, Mengyuan, Jingmen, Hubei 448000 (CN)
(74) Representative: Michalski Hüttermann & Partner mbB
(86) International application number: PCT/CN2025/121550
(87) International publication number: WO 2026/118619

(57) **Abstract**

A negative electrode sheet and a battery are provided in the disclosure. The negative electrode sheet includes a negative electrode current collector and a coating. The coating includes an inner layer and an outer layer. The inner layer is close to a surface of the negative electrode current collector, and the outer layer is away from the surface of the negative electrode current collector. A first negative electrode active material in the inner layer includes a silicon-based negative electrode material, and a second negative electrode active material in the outer layer includes a carbon-based negative electrode material.

## Description

### CROSS-REFERENCE TO RELATED APPLICATION(S)

The present disclosure claims the priority of Chinese Patent Application No. 202411777760.3 filed on December 04, 2024, the entire disclosure of which is hereby incorporated by reference.

### TECHNICAL FIELD

The present disclosure relates to the field of lithium-ion battery technology, and in particular, to a negative electrode sheet and a battery.

### BACKGROUND

Lithium-ion batteries have advantages such as high voltage, high energy density, long cycling life, and good safety performance, and are widely applied to electric vehicles. With the development of the electric vehicles, the requirements for range, charging speed, and safety performance of the electric vehicle battery become higher and higher, so that the development of a lithium-ion battery with high energy, high power, and high safety is urgent.

Compared with graphite (a theoretical specific capacity of 372 mAh/g) which is a traditional negative electrode material for the lithium battery, silicon has a theoretical specific capacity of 4200 mAh/g, which can bring about 20% to 50% increase in energy density. Silicon is a development direction of a new generation of negative electrode materials, and has a very broad application prospect in lithium-ion battery manufacturing. However, the use of silicon materials has a significant defect. The significant defect is that in the cycle process of adsorption and desorption of the lithium-ions, silicon particles will produce about a 3-fold volume change, which causes damage to the surface structure of the electrode sheet, thereby destroying the cycle performance of the battery. Therefore, in order to improve the cycle stability of silicon-based materials, some researchers improve the cycle performance of the battery by blending nano-scale silicon particles and nano-scale silicon-containing alloy materials with nano carbon materials. In addition, a conductive polymer is blended with the silicon particles, due to the characteristics of the conductive polymer such as good electrical conductivity, mechanically resilient properties, and easy control of structure modification, so as to buffer the volume change and improve the electrical conductivity. The above measures can bring a certain improvement to the battery performance to some extent. Key materials in the above measures are all in nanoscale, which greatly increases costs of materials for the electrode sheet. If micro-scale silicon particles are used for cost reduction, a volume expansion brought about thereby will be more significant.

### TECHNICAL PROBLEM

In the related art, negative electrode active materials are mostly modified to improve the performance of the negative electrode material, to improve the battery performance. However, the modification cost of the method is huge and the modified material cannot be mass-produced or mass-applied, which have certain difficulties in practical production applications and increase the production cost. In addition, at present, the mass fraction of the active material is further improved by increasing the capacity per gram of the negative electrode active material or increasing the thickness of the electrode sheet, so as to improve the energy density of the battery. However, in the method, a traditional single-layer coating process is usually used, because the design of the thick coating of the electrode sheet will affect infiltration performance of the electrolyte, and lengthen the transport path of the lithium-ions. Thus, the lithium-ions cannot reach the bottom of the electrode sheet smoothly and quickly in the charging and discharging process of the battery, so that a relatively large concentration polarization occurs, thereby further causing a series of problems such as the insufficient battery capacity, poor rate capability, low-temperature lithium precipitation, and attenuation in cycle capacity. Furthermore, in order to improve the energy density of the battery, at present, the negative electrode active material mainly used is a silicon-based negative electrode material. However, the silicon-based negative electrode material has a large volume expansion effect, and is easy to fracture and fail in a charging and discharging cycle, so that the structure stability of the silicon-based negative electrode material is poor. Therefore, the single-layer coating process cannot alleviate the volume expansion effect of silicon.

Silicon negative electrodes in the related art are difficult to achieve good balance in the battery capacity, the energy density, the structural stability, and the production costs.

### TECHNICAL SOLUTIONS

In a first aspect, a negative electrode sheet is provided in the disclosure. The negative electrode sheet includes a negative electrode current collector and a coating. The coating includes an inner layer and an outer layer. The inner layer is close to a surface of the negative electrode current collector, and the outer layer is away from the surface of the negative electrode current collector. The first negative electrode active material in the inner layer includes a silicon-based negative electrode material. The silicon-based negative electrode material includes at least one of silicon oxide, silicon carbide, nano silicon, or a silicon alloy. A second negative electrode active material in the outer layer includes a carbon-based negative electrode material. The carbon-based negative electrode material includes at least one of natural graphite, artificial graphite, hard carbon, soft carbon, mesocarbon microbeads, or graphene.

In a second aspect, a battery is provided in the disclosure. The battery includes the above negative electrode sheet.

### ADVANTAGEOUS EFFECTS

In the present disclosure, the silicon-based negative electrode material is provided as an active material in the inner layer and the carbon-based negative electrode material is provided as an active material in the outer layer, ingeniously. In this way, advantages such as high specific capacity, low discharge plateau, high charging and discharging efficiency, and good safety of the silicon-based negative electrode material can be fully used, to increase the energy density and the range of the battery. In addition, the volume expansion effect of the silicon-based negative electrode in the charging and discharging process can be sufficiently alleviated, to improve the stability of the silicon-based material in the inner layer, thereby improving the stability of an entire structure of the negative electrode sheet and improving problems such as electrode pulverization and capacity attenuation. Thus, a purpose of optimizing the energy density and the quick charging performance of the battery is achieved. Furthermore, the carbon-based negative electrode material covers the surface of the silicon-based negative electrode material. The carbon-based negative electrode material has a relatively good electrical conductivity, which can effectively improve the electrical conductivity of the silicon-based negative electrode and improve the overall electrical conductivity of the negative electrode sheet, thereby optimizing overall electrochemical performance of the silicon-based negative electrode. In addition, the design of providing the silicon-based negative electrode material as the inner layer and providing the carbon-based negative electrode material as the outer layer is more conducive to the transport performance of the lithium-ions, which enables the lithium-ions to be quickly transported to the bottom of the electrode sheet and optimizes the transport efficiency of the lithium-ions, thereby improving the electrochemical performance of the silicon-based negative electrode.

### BRIEF DESCRIPTION OF THE DRAWINGS

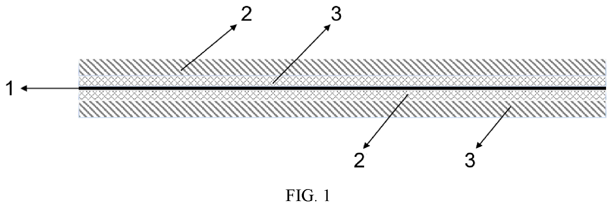

FIG. 1 is a schematic structural diagram of a negative electrode sheet in example 1.

Description of reference signs of the accompanying drawings:
1 - negative current collector; 2 - inner layer; 3 - outer layer.

### DETAILED DESCRIPTION

In some embodiments, a ratio of a thickness of an inner layer to a thickness of an outer layer ranges from 0.05: 1 to 0.2: 1. The ratio of the thickness of the inner layer to the thickness of the outer layer is ensured to be within the above range, such that the inner layer has a certain amount of silicon-based negative electrode material to improve the capacity and the energy density of the battery, and the outer layer has a certain thickness to alleviate the volume expansion effect of the silicon-based negative electrode material in the inner layer. Therefore, the performance of a negative electrode material and structural stability of the material can be balanced, and the service life of a negative electrode sheet can be prolonged, thereby optimizing the cycle performance of the battery.

In some embodiments, a thickness of the negative electrode sheet ranges from 120 µm to 280 µm. The above thickness is the thickness after drying the coated electrode slurry.

In some embodiments, a sum of the thicknesses of the inner layer with a single-sided coating and the thicknesses of the outer layer with a single-sided coating ranges from 50 µm to 130 µm. The sum of the thickness of the inner layer and the thickness of the outer layer is controlled to be within the above range, which is conducive to combining the stability of the entire structure of the negative electrode sheet and the capacity performance of a negative electrode active material, thereby improving the overall performance of a negative electrode. The above thickness is the thickness after drying the coated electrode slurry.

In some embodiments, a thickness of a negative electrode current collector ranges from 4 µm to 12 µm.

In some embodiments, the negative electrode current collector is a porous copper foil.

In some embodiments, in the inner layer, a median particle size (D50) of the negative electrode active material ranges from 0.08 µm to 20 µm. In the outer layer, when a carbon-based negative electrode material includes at least one of artificial graphite or natural graphite, a D50 of the carbon-based negative electrode material ranges from 5 µm to 18 µm. When the carbon-based negative electrode material includes at least one of soft carbon, hard carbon, mesocarbon microbeads, or graphene, the D50 of the carbon-based negative electrode material ranges from 0.5 µm to 20 µm. A D50 of a first negative electrode active material in the inner layer and a D50 of a second negative electrode active material in the outer layer is controlled to be within the above range, which is conducive to balancing the processability of the negative electrode sheet and the infiltration performance of the electrolyte. In addition, the combination of particle size is conducive to the transport performance of the lithium-ions between the outer layer and the inner layer thereby reducing the polarization during the charging and discharging process and optimizing the battery performance. In the carbon-based negative electrode materials, due to different properties of different carbon materials, the most suitable particle size also differs when the carbon materials are used as the negative electrode active materials. Therefore, when different carbon materials are used as the negative electrode active materials, the D50 of different carbon materials is limited respectively, which is more conducive to the electrochemical performance of the negative electrode active material, has a better synergistic effect with other materials, and is more conducive to improving the overall stability of the negative electrode sheet and multiple electrochemical properties such as electrical conductivity and ionic conductivity.

In some embodiments, in the inner layer, a mass fraction of the first negative electrode active material in the inner layer ranges from 80% to 98%. In the outer layer, a mass fraction of the second negative electrode active material in the outer layer ranges from 85% to 98%.

In some embodiments, in the inner layer, the silicon-based negative electrode material includes at least one of nano silicon and silicon carbide. In the outer layer, the carbon-based negative electrode material includes at least one of artificial graphite and mesocarbon microbeads. The combination of the above types of the silicon-based negative electrode materials and the carbon-based negative electrode material is more conducive to fully improving the electrical conductivity of the negative electrode and the transport performance of the lithium-ions. In addition, the combination can increase the tight connection between the inner layer and the outer layer, and improve the stability and the bonding performance of the negative electrode sheet, thereby enabling the negative electrode sheet to exhibit more excellent performance during a long-term charging and discharging process.

In some embodiments, the inner layer further includes a first conductive agent and a first binder. A mass ratio of the first negative electrode active material to the first conductive agent to the first binder is (94.0 to 98.5): (0.1 to 3.5): (1.2 to 4.0). The first conductive agent includes carbon nanotubes. The first binder includes a first carboxymethyl cellulose and polyacrylic acid. A mass ratio of the first carboxymethyl cellulose to the polyacrylic acid is 1: (3.0 to 4.0). The outer layer further includes a second conductive agent and a second binder. A mass ratio of the second negative electrode active material to the second conductive agent to the second binder is (96.0 to 98.5): (0.3 to 2.5): (1.0 to 3.5). The second conductive agent includes conductive carbon black. The second binder includes a second carboxymethyl cellulose and styrene-butadiene rubber. A mass ratio of the second carboxymethyl cellulose to the styrene-butadiene rubber is 1: (1.0 to 2.0). The carbon nanotubes have excellent electrical conductivity, high strength, high flexibility, high aspect ratio, and the ability to form a well-developed network within the material even at a low amount. When the carbon nanotubes are introduced into an active layer containing silicon in the inner layer, the carbon nanotubes can cover the surfaces of the silicon particles and establish highly conductive and durable connections among the silicon particles. Even if the silicon negative electrode particles undergo volume expansion and begin to fracture, the particles can still maintain good connections through the carbon nanotubes, which is conducive to prolonging the service life of the silicon material in the inner layer, thereby prolonging the service life of the negative electrode sheet and even the service life of the battery. In addition, in the coating and drying process, due to capillary forces, the binder will migrate to the surface. As the coating speed increases and the surface density increases, the binder will float more severely. The use of the carboxymethyl cellulose and the polyacrylic acid (CMC+PAA) in the inner layer can reduce the uneven distribution of the binder caused by the floating of styrene-butadiene rubber (SBR), thereby improving the peel force, optimizing the bonding stability of the negative electrode sheet, and improving the battery performance.

In some embodiments, in the first binder, a mass ratio of the first carboxymethyl cellulose to the polyacrylic acid is 1: 3.5.

In some embodiments, in the second binder, a mass ratio of the second carboxymethyl cellulose to the styrene-butadiene rubber is 1: 1.5.

In some embodiments, a preparation method for the above negative electrode sheet includes following steps. S1, mixing the first negative electrode active material, the first conductive agent, and the first binder to obtain a first negative electrode slurry, subsequently coating the first negative electrode slurry on one or both surfaces of the negative electrode current collector, and drying, to obtain an intermediate negative electrode sheet. S2, mixing the second negative electrode active material, the second conductive agent, and the second binder to obtain a second negative electrode slurry, subsequently coating the second negative electrode slurry on one or both surfaces of the intermediate negative electrode sheet, and drying, to obtain the negative electrode sheet. The first negative electrode slurry is coated close to the surface of the negative electrode current collector, and the second negative electrode slurry is coated away from the surface of the negative electrode current collector.

In some embodiments, a surface density *K1* of the inner layer and a surface density *K2* of the outer layer satisfy the relationship: *K1: K2*=1: (6 to 25). By controlling the surface densities of the inner and outer active material layers to satisfy the above specific ratios, the reaction rate and the charging performance of the negative electrode sheet can be optimized, and the rate and the cycle performance of the battery can be improved. The structural design of the inner and outer layers with the above surface densities can optimize the porous structure of the electrode and shorten the transport path of the lithium-ions, thereby achieving the provision of higher energy density within a smaller volume. Specifically, such a dual-layer design with different surface densities, in which the surface densities of the dual-layer are controlled to meet specific ratios, is conducive to ensuring that the transport efficiency of the lithium-ions between the upper and lower layers can achieve a good balance during the charging and discharging cycles. Therefore, the transport of ions and electrons becomes smoother, and the formation of lithium dendrites on the negative electrode can be reduced, thereby minimizing the consumption of the active lithium. Thus, the battery performance is optimized. In addition, the dual-layer design with different surface densities is more conducive to the stability of the entire structure of the negative electrode sheet, thereby enabling the negative electrode sheet to maintain a relatively good stability during multiple charging and discharging cycles, and improving the quick charging performance and cycle performance of the battery.

In some embodiments, *K1* ranges from 3 g/cm² to 50 g/cm² and *K2* ranges from 75 g/cm² to 300 g/cm². By controlling *K1* and *K2* within the above ranges, firstly, the mechanical properties of the inner layer and the outer layer and the transport performance of the lithium-ions can be balanced respectively, and secondly, the transport performance of the lithium-ions between the inner layer and outer layer can be balanced more effectively, thereby optimizing the transport efficiency of the lithium-ions and improving the battery performance. Furthermore, controlling *K1* and *K2* within the above ranges can balance multiple properties of the negative electrode sheet and make comprehensive performance of the negative electrode sheet become the best, and is more conducive to the electrochemical performance of the negative electrode sheet and the battery, thereby improving the energy density, the quick charging performance, and the cycle performance of the battery. The surface density in the disclosure is the surface density after drying the coated electrode slurry, and is the single-sided surface density.

### Example 1

### 1. Preparation of the negative electrode sheet

The negative electrode sheet in the present example was prepared according to the following steps.

At S1, the first negative electrode active material, the first conductive agent, the first binder, and water were mixed to obtain the first negative electrode slurry. Subsequently, both surfaces of the negative electrode current collector (porous copper foil) were coated with the first negative electrode slurry. After drying, the intermediate negative electrode sheet was obtained. The thickness of the inner layer formed by the first negative electrode slurry is 8 µm (the thickness of the inner layer is the single-sided thickness, and the thickness of the inner layer in other examples and comparative examples is also the single-sided thickness). The surface density *K1* is 9 g/cm² (the surface density is the single-sided surface density, and the surface density in other examples and comparative examples is also the single-sided surface density). The thickness of the negative electrode collector used is 5 µm. The first negative electrode active material is the nano silicon with the D50 of 8.5 µm. The first conductive agent is single-walled carbon nanotubes (SWCNT). The first binder is carboxymethyl cellulose (CMC) and polyacrylic acid (PAA). An amount of the silicon-based negative electrode material was 945 g, an amount of the SWCNT was 5 g, an amount of the CMC was 15 g, and an amount of the PAA was 35 g.

At S2, the second negative electrode active material, the second conductive agent, the second binder, and water were mixed to obtain the second negative electrode slurry. Subsequently, both surfaces of the intermediate negative electrode sheet were coated with the second negative electrode slurry. After drying, the negative electrode sheet was obtained. The thickness of the outer layer formed by the second negative electrode slurry was 75 µm (the thickness of the outer layer is the single-sided thickness, and the thickness of the outer layer in other examples and comparative examples is also the single-sided thickness). The surface density *K2* was 90 g/cm² (the surface density is the single-sided surface density, and the surface density in other examples and comparative examples is also the single-sided surface density). The second negative electrode active material is the artificial graphite with the D50 of 13 µm. The second conductive agent is the conductive carbon black (SP). The second binder is the CMC and styrene-butadiene rubber (SBR). An amount of the artificial graphite was 1920 g, an amount of the SP was 30 g, an amount of the CMC was 20 g, and an amount of the SBR was 30 g.

In the negative electrode sheet of the disclosure, the surface density is a design value, which is subsequently monitored with equipment in the coating process to ensure that the surface density of the coating is consistent with the design value.

The structural schematic diagram of the negative electrode sheet in the present example is referred to FIG. 1, and the structural schematic diagrams of the negative electrode sheet in other examples or the structural schematic diagrams of the negative electrode sheet in comparative examples in accordance with FIG. 1 are also referred to FIG. 1.

### 2. Preparation of the positive electrode sheet

A positive electrode active material (the positive electrode active material in the present example is NCM811), a conductive agent (SP), and a binder (PVDF) were prepared into a slurry in accordance with a mass ratio of 94:3:3 and the slurry is coated on an aluminum foil current collector, and after drying in vacuum, the positive electrode sheet was obtained. The surface density of the positive electrode sheet is 190 g/cm² (the surface density is the single-sided surface density tested after drying the coated electrode slurry), the thickness of the positive electrode active material layer is 145 µm (the thickness of the positive electrode active material layer is the single-sided thickness tested after drying the coated electrode slurry), and the thickness of the aluminum foil current collector is 12 µm.

### 3. Preparation of the battery

The negative electrode sheet prepared in the above steps, the positive electrode sheet prepared in the above steps, 1 mol/L LiPF₆/EC+DMC+EMC (v/v=1:1:1) electrolyte, a microporous PE separator (12 µm), and a shell were assembled using a conventional process to obtain a soft-back battery. When assembling the battery, it is necessary to roll and press the negative electrode sheet and the positive electrode sheet before assembling.

### Example 2

### 1. Preparation of the negative electrode sheet

In the process of preparing the negative electrode sheet of the present example, compared with Example 1, the difference is that by adjusting the coating thickness of the first negative electrode slurry and the coating thickness of the second negative electrode slurry, so that the final thickness of the inner layer is 1.4 µm, the final thickness of the outer layer is 70.0 µm, and the ratio of the thickness of the inner layer to the thickness of the outer layer is 0.02 :1. The rest operations in the present example are consistent with those of Example 1.

In the negative electrode sheet of the present example, the surface density *K1* of the inner layer 1.5 g/cm², and the surface density *K2* of the outer layer is 84.0 g/cm².

### 2. Preparation of the positive electrode sheet

The preparation of the positive electrode sheet of the present example is consistent with that of Example 1.

### 3. Preparation of the battery

The preparation of the battery of the present example is consistent with that of Example 1.

### Example 3

### 1. Preparation of the negative electrode sheet

In the process of preparing the negative electrode sheet of the present example, compared with Example 1, the difference is that by adjusting the coating thickness of the first negative electrode slurry and the coating thickness of the second negative electrode slurry, so that the final thickness of the inner layer is 45 µm, the thickness of the outer layer is 90 µm, and the ratio of the thickness of the inner layer to the thickness of the outer layer is 0.5 :1. The rest operations in the present example are consistent with those of Example 1.

In the negative electrode sheet of the present example, the surface density *K1* of the inner layer 49.5 g/cm², and the surface density *K2* of the outer layer is 108 g/cm².

### 2. Preparation of the positive electrode sheet

The preparation of the positive electrode sheet of the present example is consistent with that of Example 1.

### 3. Preparation of the battery

The preparation of the battery of the present example is consistent with that of Example 1.

### Example 4

### 1. Preparation of the negative electrode sheet

In the process of preparing the negative electrode sheet of the present example, compared with Example 1, the difference is that the silicon-based negative electrode material is the silicon carbide with the D50 of 8.5 µm, and the carbon-based negative electrode material is the mesocarbon microbeads with the D50 of 11.0 µm. The rest operations in the present example are consistent with those of Example 1.

In the negative electrode sheet of the present example, the surface density *K1* and the surface density *K2* are consistent with those of Example 1.

### 2. Preparation of the positive electrode sheet

The preparation of the positive electrode sheet of the present example is consistent with that of Example 1.

### 3. Preparation of the battery

The preparation of the battery of the present example is consistent with that of Example 1.

### Example 5

### 1. Preparation of the negative electrode sheet

In the process of preparing the negative electrode sheet of the present example, compared with Example 1, the difference is that the silicon-based negative electrode material is the silicon oxide with the D50 of 8.0 µm. The rest operations in the present example are consistent with those of Example 1.

In the negative electrode sheet of the present example, the surface density *K1* and the surface density *K2* are consistent with those of Example 1.

### 2. Preparation of the positive electrode sheet

The preparation of the positive electrode sheet of the present example is consistent with that of Example 1.

### 3. Preparation of the battery

The preparation of the battery of the present example is consistent with that of Example 1.

### Example 6

### 1. Preparation of the negative electrode sheet

In the process of preparing the negative electrode sheet of the present example, compared with Example 1, the difference is that the carbon-based negative electrode material is the hard carbon with the D50 of 12.0 µm. The rest operations in the present example are consistent with those of Example 1.

In the negative electrode sheet of the present example, the surface density *K1* and the surface density *K2* are consistent with those of Example 1.

### 2. Preparation of the positive electrode sheet

The preparation of the positive electrode sheet of the present example is consistent with that of Example 1.

### 3. Preparation of the battery

The preparation of the battery of the present example is consistent with that of Example 1.

### Example 7

### 1. Preparation of the negative electrode sheet

In the process of preparing the negative electrode sheet of the present example, compared with Example 1, the difference is that the silicon-based negative electrode material is the silicon alloy (Si-Al porous material) with the D50 of 18.0 µm, and the carbon-based negative electrode material is the graphene with the D50 of 6.0 µm. The rest operations in the present example are consistent with those of Example 1.

In the negative electrode sheet of the present example, the surface density *K1* and the surface density *K2* are consistent with those of Example 1.

### 2. Preparation of the positive electrode sheet

The preparation of the positive electrode sheet of the present example is consistent with that of Example 1.

### 3. Preparation of the battery

The preparation of the battery of the present example is consistent with that of Example 1.

### Comparative Example 1

### 1. Preparation of the negative electrode sheet

In the process of preparing the negative electrode sheet of the present example, compared with Example 1, the difference is that only the silicon-based negative electrode material (the first negative electrode slurry) is used for coating according to the inner-layer coating slurry formulation in Example 1. The preparation process of the first negative electrode slurry is consistent with that of Example 1, and the rest operations in the present example are consistent with those of Example 1.

The surface density in the present comparative example is consistent with the sum of the surface density of the inner layer and the surface density of the outer layer in Example 1.

### 2. Preparation of the positive electrode sheet

The preparation of the positive electrode sheet of the present example is consistent with that of Example 1.

### 3. Preparation of the battery

The preparation of the battery of the present example is consistent with that of Example 1.

### Comparative Example 2

### 1. Preparation of the negative electrode sheet

In the process of preparing the negative electrode sheet of the present example, compared with Example 1, the difference is that only the carbon-based negative electrode material (the second negative electrode slurry) is used for coating according to the outer-layer coating slurry formulation in Example 1. The preparation process of the second negative electrode slurry is consistent with that of Example 1, and the rest operations in the present example are consistent with those of Example 1.

The surface density in the present comparative example is consistent with the sum of the surface density of the inner layer and the surface density of the outer layer in Example 1.

### 2. Preparation of the positive electrode sheet

The preparation of the positive electrode sheet of the present example is consistent with that of Example 1.

### 3. Preparation of the battery

The preparation of the battery of the present example is consistent with that of Example 1.

### Comparative Example 3

### 1. Preparation of the negative electrode sheet

In the process of preparing the negative electrode sheet of the present example, compared with Example 1, the difference is that the position of the inner layer and the position of outer layer in Example 1 are interchanged, that is, the order of coating is adjusted at the coating process. The rest operations in the present example are consistent with those of Example 1.

### 2. Preparation of the positive electrode sheet

The preparation of the positive electrode sheet of the present example is consistent with that of Example 1.

### 3. Preparation of the battery

The preparation of the battery of the present example is consistent with that of Example 1.

### Test Example

### 1. method for the construction of the experiment

The batteries obtained from all of the above examples and comparative examples were tested for the energy density, the cycle capacity retention rate, the capacity and the constant current ratio at different charging rates (1C, 2C, 4C) as follows.

### (1) Energy Density

The batteries were calibrated with 0.5C/0.5C for 3 cycles, and the capacity of the last turn was taken as the actual test capacity. Energy density = capacity * voltage / mass.

### (2) Cycle capacity retention rate

The batteries obtained from each example and each comparative example were set aside at 25°C for 1h, and then were subjected to the cycle test at a rate of 1C/1C, with charging and discharging voltage ranging from 2.5V to 3.6V. The capacity retention rate of the batteries was tested after 200 cycles.

### (3) Capacity and constant current ratio at different charging rates (1C, 2C, 4C)

The batteries obtained from each example and each comparative example were charged to 3.65 V with constant current at rates of 1C, 2C, 4 C, respectively, and all were discharged to 2.5 V at a rate of 0.5 C. The capacity and constant current charge ratio at different rates of 1C, 2C, 4C were calculated as follows. The constant current charge ratio = the constant current (CC) charge capacity + constant voltage (CV) charge capacity / CV charge capacity.

### 2. Results of experiment

The batteries obtained from all of the above examples and comparative examples were tested for the energy density, the cycle capacity retention rate, the capacity and constant current ratio at different charging rates (1C, 2C, 4C), and the test results are shown in Table 1.

**Table 1 Comparison results of electrical performance of Examples and Comparative Examples**

| Group | Energy | Cycle Capacity | Constant Current Ratio/% | | |
|---|---|---|---|---|---|
| | Density/Wh/kg | Retention Rate /% | 1C | 2C | 4C |
| Example 1 | 460 | 94.5 | 94.3 | 91.0 | 85.0 |
| Example 2 | 380 | 93.5 | 91.2 | 88.3 | 81.9 |
| Example 3 | 650 | 91.0 | 89.5 | 86.5 | 78.8 |
| Example 4 | 400 | 92.1 | 90.9 | 87.1 | 80.5 |
| Example 5 | 420 | 93.0 | 92.0 | 89.0 | 82.5 |
| Example 6 | 430 | 91.5 | 91.5 | 88.5 | 82.0 |
| Example 7 | 440 | 90.0 | 89.9 | 86.8 | 79.0 |
| Comparative Example 1 | 720 | 62.0 | 80.0 | 75.0 | 60.4 |
| Comparative Example 2 | 360 | 88.5 | 88.2 | 80.5 | 75.0 |
| Comparative Example 3 | 680 | 80.0 | 85.4 | 83.5 | 78.5 |

It can be learned from Table 1 that the batteries with the negative electrode sheet prepared according to the present disclosure have a relatively high energy density, a relatively high cycle capacity retention rate, a relatively high capacity at a high rate, and a relatively high constant current ratio at a high rate. In other words, the batteries have a relatively good quick charging performance, with specific reference made to Examples 1 to 7.

The active materials of the negative electrode sheet in the Comparative Example 1 are all silicon-based negative electrode materials, and the active materials in the two active material layers of the negative electrode sheet in the Comparative Example 2 are all carbon-based negative electrode materials. The active materials are all silicon negative electrodes, and the silicon negative electrodes will undergo obvious volume expansion in the process of charging and discharging, which may lead to the destruction of the internal structure of the battery, thereby affecting the cycle performance and the cycling life of the battery.

In the negative electrode sheet provided in Comparative Example 3, the positions of the inner layer and the outer layer are opposite to those of Example 1, that is, the positions of the active materials in the inner layer and the outer layer are opposite to those of Example 1. The design may improve the energy density of the battery, and correspondingly, the cycling life of the battery is shorter.

Comparing Example 1 with Examples 2 to 4, the ratio of the thickness of the inner layer to the thickness of the outer layer in Examples 2 and 3 are not in the range of 0.05~0.2:1. When the silicon negative electrode in the inner layer is coated too thin, the energy density of the battery is difficult to be improved significantly, and when the silicon negative electrode in the inner layer is coated too thick, the volume expansion of the silicon negative electrodes becomes more and the cycling life of the battery is shorter. In addition, the sum of the thickness of the inner layer and the thickness of the outer layer is thinner in Example 2 and the sum of the thickness of the inner layer and the thickness of the outer layer is thicker in Example 3, which are not conducive to balancing the multiple performance of the negative electrode, resulting in the battery provided in Example 2 and Example 3 having a lower constant current charge ratio at a high rate, and poorer performance at a high rate.

Comparing Example 1 with Examples 4 to 7, the types of the silicon-based negative electrode material and/or the carbon-based negative electrode material are changed in Examples 4 to 7, it can be found that the battery performance in multiple aspects is also better when the types of the silicon-based negative electrode material and/or the carbon-based negative electrode material are changed. In addition, when the combination of the silicon-based negative electrode material and the carbon negative electrode material is the combination of the nano silicon and the artificial graphite, or the combination of the silicon oxide and the artificial graphite, or the combination of the nano silicon and the hard carbon, the structural stability, the electrical conductivity, and the ionic conductivity of the prepared negative electrode sheet are better, which can be more conducive to the energy density, the cycle capacity retention rate, and the quick charging performance of the battery. When the combination of the silicon-based negative electrode material and the carbon negative electrode material is the combination of the nano silicon and the artificial graphite, the performance of the prepared negative electrode sheet and the prepared battery is the best.

## Claims

1. A negative electrode sheet, comprising a negative electrode current collector and a coating, wherein the coating comprises an inner layer and an outer layer, the inner layer is close to a surface of the negative electrode current collector, and the outer layer is away from the surface of the negative electrode current collector, wherein
a first negative electrode active material in the inner layer comprises a silicon-based negative electrode material, the silicon-based negative electrode material comprises at least one of silicon oxide, silicon carbide, nano silicon, or a silicon alloy; and
a second negative electrode active material in the outer layer comprises a carbon-based negative electrode material, the carbon-based negative electrode material comprises at least one of natural graphite, artificial graphite, hard carbon, soft carbon, mesocarbon microbeads, or graphene.

2. The negative electrode sheet according to claim 1, wherein a ratio of a thickness of the inner layer to a thickness of the outer layer ranges from 0.05: 1 to 0.2: 1.

3. The negative electrode sheet according to claim 2, wherein a sum of the thicknesses of the inner layer with a single-sided coating and the thicknesses of the outer layer with a single-sided coating ranges from 50 µm to 130 µm.

4. The negative electrode sheet according to claim 1, wherein
in the inner layer, a median particle size (D50) of the first negative electrode active material ranges from 0.08 µm to 20 µm; and
in the outer layer, when the carbon-based negative electrode material comprises at least one of the artificial graphite or the natural graphite, a D50 of the carbon-based negative electrode material ranges from 5 µm to 18 µm; when the carbon-based negative electrode material comprises at least one of the soft carbon, the hard carbon, the mesocarbon microbeads, or the graphene, the D50 of the carbon-based negative electrode material ranges from 0.5 µm to 20 µm.

5. The negative electrode sheet according to claim 1, wherein
in the inner layer, a mass fraction of the first negative electrode active material in the inner layer ranges from 80% to 98%; and
in the outer layer, a mass fraction of the second negative electrode active material in the outer layer ranges from 85% to 98%.

6. The negative electrode sheet according to claim 1, wherein
in the inner layer, the silicon-based negative electrode material comprises at least one of the nano silicon or the silicon carbide; and
in the outer layer, the carbon-based negative electrode material comprises at least one of the artificial graphite or the mesocarbon microbeads.

7. The negative electrode sheet according to claim 6, wherein
the inner layer further comprises a first conductive agent and a first binder, a mass ratio of the first negative electrode active material to the first conductive agent to the first binder is (94.0 to 98.5): (0.1 to 3.5): (1.2 to 4.0), wherein the first conductive agent comprises carbon nanotubes, the first binder comprises a first carboxymethyl cellulose and polyacrylic acid, and a mass ratio of the first carboxymethyl cellulose to the polyacrylic acid is 1: (3.0 to 4.0); and
the outer layer further comprises a second conductive agent and a second binder, a mass ratio of the second negative electrode active material to the second conductive agent to the second binder is (96.0 to 98.5): (0.3 to 2.5): (1.0 to 3.5), wherein the second conductive agent comprises conductive carbon black, the second binder comprises a second carboxymethyl cellulose and styrene-butadiene rubber, and a mass ratio of the second carboxymethyl cellulose to the styrene-butadiene rubber is 1: (1.0 to 2.0).

8. The negative electrode sheet according to claim 1, wherein a surface density *K1* of the inner layer and a surface density *K2* of the outer layer satisfy the relationship: *K1: K2=1:* (6 to 25).

9. The negative electrode sheet according to claim 8, wherein *K1* ranges from 3 g/cm² to 50 g/cm² and *K2* ranges from 75 g/cm² to 300 g/cm².

10. The negative electrode sheet according to claim 1, wherein a thickness of the negative electrode sheet ranges from 120 µm to 280 µm.

11. The negative electrode sheet according to claim 1, wherein a thickness of the negative electrode current collector ranges from 4 µm to 12 µm.

12. The negative electrode sheet according to claim 1, wherein the negative electrode current collector is a porous copper foil.

13. The negative electrode sheet according to claim 7, wherein in the first binder, a mass ratio of the first carboxymethyl cellulose to the polyacrylic acid is 1: 3.5.

14. The negative electrode sheet according to claim 7, wherein in the second binder, a mass ratio of the second carboxymethyl cellulose to the styrene-butadiene rubber is 1: 1.5.

15. The negative electrode sheet according to claim 7, wherein the first negative electrode active material is the nano silicon, and the second negative electrode active material is the artificial graphite.

16. The negative electrode sheet according to claim 7, wherein a method for preparing the negative electrode sheet comprises:
S1, mixing the first negative electrode active material, the first conductive agent, and the first binder to obtain a first negative electrode slurry, subsequently coating the first negative electrode slurry on one or both surfaces of the negative electrode current collector, and drying, to obtain an intermediate negative electrode sheet;
S2, mixing the second negative electrode active material, the second conductive agent, and the second binder to obtain a second negative electrode slurry, subsequently coating the second negative electrode slurry on one or both surfaces of the intermediate negative electrode sheet, and drying, to obtain the negative electrode sheet, wherein
the first negative electrode slurry is coated close to the surface of the negative electrode current collector, and the second negative electrode slurry is coated away from the surface of the negative electrode current collector.

17. A battery, comprising the negative electrode sheet according to any one of claims 1 to 16, a positive electrode sheet, an electrolyte, and a separator.

18. The battery according to claim 17, wherein a positive electrode active material layer of the positive electrode sheet comprises a ternary positive electrode active material.

19. The battery according to claim 18, wherein solvents of the electrolyte are ethylene carbonate (EC), dimethyl carbonate (DMC), and ethyl methyl carbonate (EMC), and the electrolyte further contains 1 mol/L LiPF₆.

20. The battery according to claim 18, wherein a surface density of the positive electrode sheet ranges from 180 g/cm² to 200 g/cm², and a thickness of the positive electrode active material layer ranges from 140 µm to 160 µm.
